(19) Europäisches Patentamt
European Patent Office
Office européen des brevets

(11) Veröffentlichungsnummer: **0 088 049**
**B1**

# (12) EUROPÄISCHE PATENTSCHRIFT

(45) Veröffentlichungstag der Patentschrift: **23.10.85**

(51) Int. Cl.⁴: **A 01 N 25/04,** A 01 N 43/70 // (A01N43/70, 43:56, 37:46, 37:26, 37:22)

(21) Anmeldenummer: **83810074.1**

(22) Anmeldetag: **21.02.83**

## (54) Herbizide Mischungen.

(30) Priorität: **25.02.82 US 352437**

(43) Veröffentlichungstag der Anmeldung: **07.09.83 Patentblatt 83/36**

(45) Bekanntmachung des Hinweises auf die Patenterteilung: **23.10.85 Patentblatt 85/43**

(84) Benannte Vertragsstaaten: **AT BE CH DE FR IT LI NL**

(56) Entgegenhaltungen:
**EP - A - 0 006 348**
**EP - A - 0 010 972**
**US - A - 2 845 380**

(73) Patentinhaber: **CIBA-GEIGY AG, Postfach, CH-4002 Basel (CH)**

(72) Erfinder: **Abildt, Uwe, Dr., Rebgasse 33, D-7889 Grenzach-Wyhlen (DE)**
Erfinder: **Langauer, Theodor, Dr., Obrechtstrasse 4, CH-4132 Muttenz (CH)**

**EP 0 088 049 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft eine fließfähige, herbizide Zusammensetzung in Form einer wäßrigen Dispersion, die eine Wirkstoffmischung aus mindestens einem Chlortriazin und mindestens einem Chloracetanilid und ein neues Tensidgemisch enthält.

Chlortriazine und Chloracetanilide, Verfahren zu deren Herstellung und ihre Wirkung als Herbizide sind aus dem US-Patent 2 891 855 und der DE-OS 2 328 340 bekannt.

Im Handel befinden sich Gemische dieser beiden Wirkstoffklassen als wäßrige Dispersionen.

Die darin enthaltenen Wirkstoffkombinationen unterscheiden sich in der mengenmäßigen Zusammensetzung der Einzelwirkstoffe je nach Anwendungskultur, -art, -klima und regionaler Unkrautpopulation.

Für jede dieser speziell auf die besonderen Bedürfnisse abgestimmten Wirkstoffkombinationen aus Chlortriazinen und Chloracetanilinen ist eine besondere Formulierung, d. h. insbesondere eine andersartige Tensidkombination notwendig. Die Formulierung solcher Substanzgemische wird weiter durch die Tatsache kompliziert, daß verschiedene Kristallformen des gleichen Wirkstoffs, wie sie aus unterschiedlichen Herstellungsverfahren resultieren können, eine andere Formulierung bei sonst gleichem Mengenverhältnis der Wirkstoffe zueinander bedingen.

Dadurch wird eine Vielzahl von unterschiedlichen Formulierungen der Kombination der gleichen Wirkstoffe erforderlich, die sowohl für den Hersteller als auch für den Anwender ein beträchtliches Risiko in bezug auf die Anwendungssicherheit solcher Mittel birgt.

Es besteht deshalb das Bedürfnis, über eine Formulierungsmöglichkeit zu verfügen, die alle biologisch und technologisch bedingten Änderungen im Wirkstoffanteil einer fließfähigen konzentrierten Dispersion zuläßt, ohne daß der Tensidanteil der Formulierung von Grund auf neu komponiert werden muß.

Erfindungsgemäß wird deshalb vorgeschlagen, ein fließfähiges, herbizides Mittel bestehend aus mindestens einer festen dispersen Phase und einer kontinuierlichen wäßrigen Phase, das als wirksame Komponente eine Kombination von mindestens einem Chlortriazin und mindestens einem Chloranilid enthält, so zusammenzusetzen, daß es

10 bis 50 Gew.-% eines Chlortriazins der Formel I,

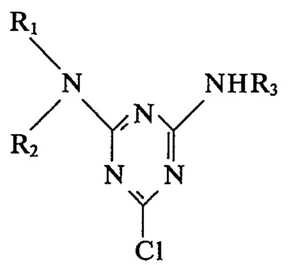

(I)

worin $R_1$ für $C_1$—$C_4$-Alkyl, $R_2$ für Wasserstoff oder $C_1$—$C_4$-Alkyl und $R_3$ für $C_3$—$C_4$-Cycloalkyl oder gegebenenfalls durch Methoxy oder Cyan substituiertes $C_1$—$C_4$-Alkyl stehen, oder eines Gemisches solcher Wirkstoffe;

10 bis 50 Gew.-% eines Chloracetanilids der Formel II

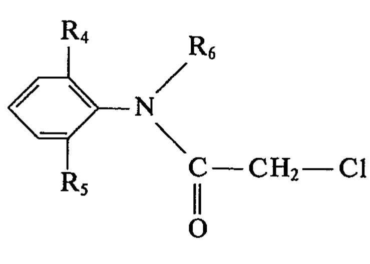

(II)

worin $R_4$ und $R_5$ unabhängig voneinander Methyl oder Äthyl und $R_6$ $C_3$—$C_4$-Alkinyl oder gegebenenfalls durch $C_1$—$C_4$-Alkoxy, Äthoxycarbonyl oder Pyrazolyl substituiertes $C_1$—$C_3$-Alkyl bedeuten, oder eines Gemisches solcher Wirkstoffe;

1 bis 10 Gew.-% eines anionischen Tensids der Klasse Mono- oder Di-(phenol-polyglykoläther)-phosphorsäureester oder deren Salze der Formel III,

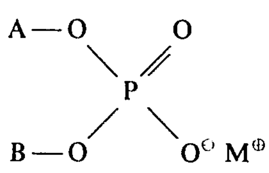

(III)

worin A einen Rest der Formel

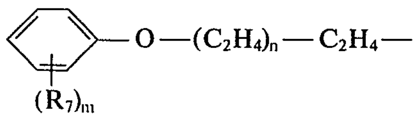 bedeutet,

B die gleiche Bedeutung wie A hat oder für Wasserstoff steht und $M^{\oplus}$ ein Proton oder ein Natrium-, Kalium- oder Triäthanolammoniumkation bedeutet, wobei n für eine ganze Zahl von 4 bis 40, m für eine ganze Zahl von 1 bis 4 und $R_7$ für Wasserstoff, Styryl oder $C_3$—$C_{10}$-Alkyl stehen;

0,5 bis 10 Gew.-% eines nichtionischen Tensids der Klasse Polyglykoläther der Formel IV,

$$R_8\text{—O—}(C_2H_4O)_p\text{—}C_2H_4\text{—OH} \qquad (IV)$$

worin p eine ganze Zahl von 2 bis 45 und $R_8$ $C_{12}$—$C_{18}$-Alkyl, $C_{12}$—$C_{22}$-Alkanoyl, $C_{12}$—$C_{22}$-Alkenoyl, $C_{12}$—$C_{22}$-Alkadienoyl, $C_{12}$—$C_{22}$-Alkatrienoyl oder durch $C_5$—$C_8$-Cycloalkyl oder ein bis drei $C_3$—$C_{10}$-Alkylreste substituiertes Phenyl bedeuten;

0 bis 9,5 Gew.-% eines weiteren nichtionischen Tensids der Formel IV, wobei dieses jeweils größere Anzahlen von Glykoleinheiten enthält und wobei die Gesamtmenge an nichtionischem Tensid zwischen 0,5 und 10 Gew.-% beträgt,

0 bis 5 Gew.-% eines wasserlöslichen oder in Wasser quellfähigen Verdickungsmittels und

0 bis 25 Gew.-% eines Antifrostmittels enthält.

Unter den obigen Zusammensetzungen sind diejenigen bevorzugt, die

0,6 bis 10 Gew.-% eines Gemisches zweier nichtionischer Tenside der Klasse Polyglykoläther der Formel IV,

$$R_8\text{—O—}(C_2H_4O)_p\text{—}C_2H_4\text{—OH} \qquad (IV)$$

die sich in der Anzahl der Glykoleinheiten p um mindestens die Zahl eins unterscheiden, wobei p eine ganze Zahl von 2 bis 45 und $R_8$ $C_{12}$—$C_{18}$-Alkyl, $C_{12}$—$C_{22}$-Alkanoyl, $C_{12}$—$C_{22}$-Alkenoyl, $C_{12}$—$C_{22}$-Alkadienoyl, $C_{12}$—$C_{22}$-Alkatrienoyl oder durch $C_5$—$C_8$-Cycloalkyl oder ein bis drei $C_3$—$C_{10}$-Alkylreste substituiertes Phenyl bedeuten und wobei der Mischungspartner mit der kleineren Anzahl von Glykoleinheiten im Gesamtgemisch in 0,5—9,9 Gew.-% und der Mischungspartner mit der größeren Anzahl von Glykoleinheiten im Gesamtgemisch in 0,1—5,0 Gew.-% vorhanden ist;

enthalten.

In den Definitionen der Reste $R_1$ bis $R_6$ steht Alkyl für Methyl, Äthyl, n-Propyl, i-Propyl sowie die isomeren Butylreste. Beispiele für Alkoxy sind Methoxy, Äthoxy, n-Propyloxy, i-Propyloxy sowie die isomeren Butyloxyreste. Alkinyl steht für Propargyl, 2-Butinyl, 3-Butinyl und Methylpropargyl. Cycloalkylreste sind Cyclopropyl und Cyclobutyl.

Beispiele für Wirkstoffe, die in den erfindungsgemäßen Zusammensetzungen formuliert werden können, sind:

2-Chlor-4,6-di-(äthylamino)-1,3,5-triazin (Simazin), 2-Chlor-4-äthylamino-6-isopropylamino-1,3,5-triazin (Atrazin), 2-Chlor-4-äthylamino-6-(1-cyano-1-methyläthylamino)-1,3,5-triazin (Cyanazin), 2-Chlor-4-cyclopropylamino-6-isopropylamino-1,3,5-triazin (Cyprazin), 2-Chlor-4-äthylamino-6-tert.butylamino-1,3,5-triazin (Terbutylazin), 2-Chlor-4,6-di-(isopropylamino)-1,3,5-triazin (Propazin), 2-Chlor-4-isopropylamino-6-methoxypropylamino-1,3,5-triazin (Mesoprazin), 2-Chlor-4-tert.butylamino-6-methylamino-1,3,5-triazin, 2-Chlor-4-äthylamino-6-diäthylamino-1,3,5-triazin, 2-Chlor-4-äthylamino-6-sek.butylamino-1,3,5-triazin sowie $\alpha$-Chlor-2'-äthyl-6'-methyl-N-(äthoxymethyl)-acetanilid (Acetochlor), $\alpha$-Chlor-2',6'-dimethyl-N-(methoxyäthyl)-acetanilid (Dimethachlor), $\alpha$-Chlor-2'-äthyl-6'-methyl-N-(1-methyl-2-methoxyäthyl)-acetanilid (Metolachlor), $\alpha$-Chlor-2',6'-diäthyl-N-(methoxymethyl)-acetanilid (Alachlor), $\alpha$-Chlor-2',6'-diäthyl-N-(äthoxycarbonylmethyl)-acetanilid, $\alpha$-Chlor-2',6'-diäthyl-N-(butyloxymethyl)-acetanilid (Butachlor), $\alpha$-Chlor-2'-äthyl-6'-methyl-N-(propargyl)-acetanilid, $\alpha$-Chlor-2'-äthyl-6'-methyl-N-(pyrazol-1-ylmethyl)-acetanilid (Metazolchlor), $\alpha$-Chlor-2',6'-diäthyl-N-(n-propyloxyäthyl)-acetanilid (Pretilachlor).

Unter den Triazin-Wirkstoffen sind diejenigen bevorzugt, die nur sekundäre Aminogruppen als Substituenten enthalten, wie z. B. 2-Chlor-4,6-di-(äthylamino)-1,3,5-triazin, 2-Chlor-4-äthylamino-6-iso-

propylamino-1,3,5-triazin, 2-Chlor-4-äthylamino-6-(1-cyano-1-methyläthylamino)-1,3,5-triazin, 2-Chlor-4-äthylamino-6-tert.butylamino-1,3,5-triazin und 2-Chlor-4-cyclopropylamino-6-isopropylamino-1,3,5-triazin.

Unter den Acetanilid-Wirkstoffen sind diejenigen bevorzugt, die am Stickstoffatom eine Alkoxyalkylgruppe mit insgesamt höchstens 5 Kohlenstoffatomen tragen, wie z. B.: α-Chlor-2'-äthyl-6'-methyl-N-(äthoxymethyl)-acetanilid, α-Chlor-2',6'-dimethyl-N-(methoxyäthyl)-acetanilid, α-Chlor-2'-äthyl-6'-methyl-N-(1-methyl-2-methoxyäthyl)-acetanilid, α-Chlor-2',6'-diäthyl-N-(methoxymethyl)-acetanilid, α-Chlor-2',6'-diäthyl-N-(butyloxymethyl)-acetanilid und α-Chlor-2',6'-diäthyl-N-(n-propyloxyäthyl)-acetanilid.

Cycloalkylreste der Definition von $R_8$ umfassen Cyclopentyl, Cyclohexyl, Cycloheptyl und Cyclooctyl.

Beispiele für substituierte Phenylgruppen wie in den Definitionen von A oder $R_8$ sind 4-Nonylphenyl; 2,4,6-Tributylphenyl; 2,4,6-Tristyrylphenyl; 2,4-Dinonylphenyl; 2,4,6-Tripentylphenyl; 2,4-Distyrylphenyl; 4-Styrylphenyl; 2,3,4,6-Tetrabutylphenyl; 4-Decylphenyl; 4-Heptylphenyl; 4-Pentylphenyl; 2,4-Dihexylphenyl; 2,4-Dioctylphenyl; 4-Octylphenyl; 4-Hexylphenyl; 2,4-Dipentylphenyl; 2,4,6-Tripentylphenyl, 4-Cyclohexylphenyl; 4-Cyclopentylphenyl und 2,4-Dicyclohexylphenyl.

Alkylreste mit 12 bis 18 Kohlenstoffatomen umfassen lineare Reste wie n-Dodecyl, n-Tridecyl, n-Tetradecyl, n-Pentadecyl, n-Hexadecyl, n-Heptadecyl und n-Octadecyl, aber auch deren Isomeren mit verzweigten Ketten wie z. B. Trimethylnonyl, Tetramethylnonyl, Dimethylundecyl und Dipropylhexyl.

Alkanoyl-, Alkenoyl-, Alkadienoyl- oder Alkatrienoylreste, wie sie unter der Definition von $R_8$ verstanden werden, sind die Carbonsäurereste, die sich z. B. aus den folgenden gesättigten Carbonsäuren ableiten: Laurinsäure (C 12), Myristinsäure (C 14), Pentadecylsäure (C 15), Palmitinsäure (C 16), Margarinsäure (C 17), Stearinsäure (C 18), Arachinsäure (C 20), Behensäure (C 22) oder Tuberkulostearinsäure (C 19); oder aus den folgenden einfach ungesättigten Carbonsäuren: Lauroleinsäure (C 12), Myristoleinsäure (C 14), Palmitoleinsäure (C 16), Petroselinsäure (C 18), Ölsäure (C 18), Elaidinsäure (C 18), Vaccensäure (C 18) oder Erucasäure (C 22); oder aus den folgenden zwei- oder dreifach ungesättigten Carbonsäuren: Linolsäure (C 18), Linolensäure (C 18), Ricinensäure (C 18) und α-Elaeostearinsäure (C 18).

Zur Einstellung eines optimalen Viskositätsgrades ist es häufig notwendig der herbiziden Zusammensetzung ein wasserlösliches oder in Wasser quellfähiges Verdickungsmittel zuzusetzen. Solche geeigneten Verdickungsmittel sind: Polysaccharide vom Xantham-Typ, Alignat-Typ, Guar-Typ, Cellulose-Typ oder synthetische Makromoleküle wie Polyäthylenglykole, Polyvinylpyrrolidone, Polyvinylalkohole, Polyacrylate oder quellfähige, strukturbildende Silikate wie pyrogene oder gefällte Kieselsäuren, Bentone, Montmorillonite, Hectonite, Attapulgite bzw. organische Derivate der genannten Strukturen von Aluminium-Silikaten.

Um die Fließfähigkeit der herbiziden Zusammensetzung auch bei tiefen Temperaturen zu erhalten und das Ausfrieren der wäßrigen homogenen Phase zu verhindern, werden den erfindungsgemäßen Mitteln meist Frostschutzmittel zugesetzt. Hierzu eignen sich übliche Zusätze wie Äthylenglykol, Propylenglykol, Glycerin, Di-, Tri- und Tetraäthylenglykol und Harnstoff.

Die erfindungsgemäßen Formulierungen enthalten im allgemeinen 10—50 Gew.-% eines herbiziden Chlortriazins der Formel I oder eines Gemisches solcher Wirkstoffe. Vorzugsweise enthalten die handelsfähigen Zusammensetzungen 15—25 Gew.-% Chlortriazin. Der Gehalt an herbizidem Chloracetanilid oder Chloracetanilidgemisch beträgt ebenfalls 10—50 Gew.-%, vorzugsweise aber 10—30 Gew.-%. Die Kombination enthält weiter erfindungsgemäß 1—10 Gew.-%, vorzugsweise 1—4 Gew.-%, eines anionischen Tensids der Formel III, 0,5—10 Gew.-%, vorzugsweise 2—6 Gew.-% eines nicht-ionischen Tensids der Formel IV. Fakultativ enthalten die erfindungsgemäßen fließfähigen herbiziden Zusammensetzungen 0—9,5 Gew.-% eines weiteren nichtionischen Tensids der Formel IV, wobei dieses jeweils größere Anzahlen von Glykoleinheiten enthält, 0—5 Gew.-% eines Verdickungsmittels und 0—25 Gew.-% eines Frostschutzmittels. Bevorzugt sind dabei 0,1—5,0 Gew.-% des zweiten nichtionischen Tensids der Formel IV, wobei der Gesamtgehalt der Mischung an nichtionischem Tensid zwischen 0,6—10 Gew.-% liegt und 0,1—2 Gew.-% Verdickungsmittel. Die vorzugsweise eingesetzte Menge Frostschutzmittel hängt von den geographischen, klimatischen und saisonalen Gegebenheiten des vorgesehenen Herbizideinsatzes ab.

Die erfindungsgemäßen Zusammensetzungen zeichnen sich durch hervorragende Toleranz gegen biologisch oder technisch bedingte Änderungen im Wirkstoffanteil der Mittel aus. In einem breiten Bereich braucht die Tensidkomponente bei Erhöhung oder Erniedrigung des Anteils eines Herbizidwirkstoffs nicht oder nur mengenmäßig in geringem Umfang variiert werden. Auch bei langem Lagern des verkaufsfertigen Dispersionskonzentrates wird keine Zersetzung oder Koagulation der Dispersion beobachtet. Geringfügiges Absetzen der festen dispersen Phase wird nur bei sehr langem Lagern beobachtet. Dieser Absetzungsvorgang ist normal und kann durch einfaches Schütteln oder Rühren rückgängig gemacht werden. Die Dispersion ist also stabil.

Einen Vorteil für den Hersteller bedeutet es, daß bei der Kombination eines flüssigen und eines festen Wirkstoffs beide Komponenten nicht mehr synchron emulgiert bzw. suspendiert werden müssen, sondern daß sie zeitlich unabhängig voneinander vorbereitet und anschließend kombiniert werden können.

Bevorzugte erfindungsgemäße Zusammensetzungen enthalten folgende Bestandteile:

| | |
|---|---|
| 30 bis 50 Gew.-% | Wasser, |
| 15 bis 25 Gew.-% | eines Chlortriazins der Formel I oder eines Gemisches zweier solcher Wirkstoffe, |
| 10 bis 30 Gew.-% | eines Chloracetanilids der Formel II, |
| 1 bis 4 Gew.-% | eines anionischen Tensids der Formel III, |
| 2 bis 6 Gew.-% | eines nichtionischen Tensids der Formel IV mit (q-r) Glykoleinheiten und |
| 0 bis 2 Gew.-% | eines nichtionischen Tensids der Formel IV mit Glykoleinheiten, wobei q eine Zahl von 3 bis 45 und r eine Zahl von 1 bis (q-2) bedeuten. |

Eine weitere Bevorzugung liegt darin, daß in den obigen Zusammensetzungen die Chlortriazinkomponente durch Atrazin oder Terbutylazin bzw. ein Gemisch davon, das Chloracetanilid durch Metolachlor, das anionische Tensid durch Mono- und Di-(tristyrylphenol-polyglykoläther)-phosphorsäureester- oder deren Triäthanolammomiumsalz-Gemische oder durch Mono- und Di-(nonylphenol-polyglykoläther)-phosphorsäureester- oder deren Kalium- oder Natriumsalz-Gemische und die nichtionischen Tenside durch Octyl- oder Nonylphenol-polyglykoläther mit 2 bis 13 Glykoleinheiten verkörpert sind.

Besonders bevorzugt sind hiervon solche Formulierungen, in denen der Unterschied der Anzahl der Glykoleinheiten in den beiden nichtionischen Tensiden 2 bis 5 beträgt.

Spezifisch bevorzugte fließfähige, herbizide Formulierungen enthalten die folgenden Komponenten:

| | | |
|---|---|---|
| *α*) | 23,15 Gew.-% | Metolachlor, |
| | 23,15 Gew.-% | Atrazin, |
| | 2,3 Gew.-% | Äthylenglykol, |
| | 0,2 Gew.-% | Silikonöl, |
| | 1,7 Gew.-% | Mono- und Di-(tristyrylphenol-octadecaglykoläther)-phosphorsäureester-triäthanolammoniumsalz-Gemisch, |
| | 3,7 Gew.-% | Nonylphenol-hexaglykoläther, |
| | 1,1 Gew.-% | Nonylphenol-nonaglykoläther, |
| | 0,15 Gew.-% | Polysaccharid, |
| | 0,15 Gew.-% | Formaldehyd und |
| | ad 100 Gew.-% | Wasser. |

| | | |
|---|---|---|
| *β*) | 23,15 Gew.-% | Metolachlor, |
| | 11,58 Gew.-% | Atrazin, |
| | 11,57 Gew.-% | Terbutylazin, |
| | 2,75 Gew.-% | Äthylenglykol, |
| | 0,25 Gew.-% | Silikonöl, |
| | 1,40 Gew.-% | Mono- und Di-(tristyrylphenol-octadecylglykoläther)-phosphorsäureester-triäthanolammoniumsalz-Gemisch, |
| | 3,70 Gew.-% | Nonylphenol-hexaglykoläther, |
| | 0,90 Gew.-% | Nonylphenol-monoglykoläther, |
| | 0,14 Gew.-% | Polysaccharid, |
| | 0,14 Gew.-% | Formaldehyd und |
| | ad 100 Gew.-% | Wasser. |

| | | |
|---|---|---|
| *γ*) | 30,84 Gew.-% | Metolachlor, |
| | 15,46 Gew.-% | Terbutylazin, |
| | 4,60 Gew.-% | Äthylenglykol, |
| | 0,25 Gew.-% | Silikonöl, |
| | 1,95 Gew.-% | Mono- und Di-(nonylphenol-hexaglykoläther)-phosphorsäureester-Kaliumsalz-Gemisch, |
| | 2,80 Gew.-% | Nonylphenol-hexaglykoläther, |
| | 0,40 Gew.-% | Nonylphenol-nonaglykoläther, |
| | 0,14 Gew.-% | Polysaccharid, |
| | 0,14 Gew.-% | Formaldehyd und |
| | ad 100 Gew.-% | Wasser. |

Das folgende Beispiel dient der näheren Erläuterung der vorliegenden Erfindung.

## Beispiel 1

Jeweils 100 kg einer fließfähigen herbiziden Zusammensetzung *α*, *β* und *γ* mit den Wirkstoffen Atrazin bzw. Terbutylazin und Metolachlor werden hergestellt indem man

a) in einem Rührkessel jeweils unter Rühren bis zur Homogenität folgende Substanzen zusammen mischt:

| | Mengen in kg | | |
|---|---|---|---|
| | α | β | γ |
| Wasser | 14,50 | 15,75 | 14,40 |
| Mono- und Di-(tristyrylphenoloctadecaglykoläther)-phosphorsäureester-triäthanolaminsalz-Gemisch | 0,25 | 0,45 | – |
| Mono- und Di-(nonylphenol-hexaglykoläther)-phosphorsäureester-Kaliumsalz-Gemisch | – | – | 1,30 |
| Nonylphenol-hexaglykoläther | 3,47 | 2,80 | 1,85 |
| Nonylphenol-nonaglykoläther | 0,90 | 0,70 | 0,25 |

und anschließend in gleichmäßigem Strahl jeweils

| | Menge in kg | | |
|---|---|---|---|
| | α | β | γ |
| 96%iges Metolachlor | 24,10 | 24,10 | 32,12 |

zusetzt und die entstehende Emulsion für 10 Minuten rührt;

b) in einem zweiten Rührkessel folgende Substanzen bis zur Homogenität vermischt:

| | Menge in kg | | |
|---|---|---|---|
| | α | β | γ |
| Wasser | 24,65 | 23,8 | 23,75 |
| Äthylenglykol | 2,30 | 2,75 | 4,60 |
| Mono- und Di-(tristyrylphenoloctadecaglykoläther)-phosphorsäureester-triäthanolsalz-Gemisch | 1,45 | 0,95 | – |
| Mono- und Di-(nonylphenol-hexaglykoläther)-phosphorsäureester-Kaliumsalz-Gemisch | – | – | 0,65 |
| Nonylphenol-hexaglykoläther | 0,23 | 0,50 | 0,95 |
| Nonylphenol-nonaglykoläther | 0,20 | 0,20 | 0,15 |
| Silikonöl | 0,20 | 0,25 | 0,25 |

und dann jeweils

| | Menge in kg | | |
|---|---|---|---|
| | α | β | γ |
| 98%iges Atrazin | 23,62 | 11,80 | – |
| 99%iges Terbutylazin | – | 11,70 | 15,60 |

einschlämmt, das Gemisch für 5–10 Minuten im Vakuum homogenisiert und in einer Glasperlenmühle oder Sandmühle auf eine Korngröße von kleiner als 15 μm mahlt;

c) in einem weiteren Rührkessel 0,14 kg Polysaccharid (Xantham-Typ) in 5,27 kg Wasser einrührt, mit 0,14 kg 37%igem Formalin versetzt, für 10 Minuten rührt und danach für mindestens 4 Stunden quellen läßt,

d) ein Drittel des nach c) erhaltenen Gels in die nach b) hergestellte Suspension einrührt,

e) diese Mischung in die nach a) erhaltene Emulsion einmischt und schließlich in diese Dispersion die restlichen zwei Drittel des nach c) erhaltenen Gels bis zur Homogenität einrührt.

Die so hergestellten Zubereitungen enthalten

| | | |
|---|---|---|
| α) | 23,15 Gew.-% | Metolachlor, |
| | 23,15 Gew.-% | Atrazin, |
| | 2,30 Gew.-% | Äthylenglykol, |
| | 0,20 Gew.-% | Silikonöl, |
| | 1,70 Gew.-% | Mono- und Di-(tristyrylphenol-octadecaglykoläther)-phosphorsäureester-triäthanolammoniumsalz-Gemisch, |
| | 3,70 Gew.-% | Nonylphenol-hexaglykoläther, |
| | 1,10 Gew.-% | Nonylphenol-nonaglykoläther, |
| | 0,14 Gew.-% | Polysaccharid, |
| | 0,14 Gew.-% | Formaldehyd und |
| | ad 100 Gew.-% | Wasser. |
| β) | 23,15 Gew.-% | Metolachlor, |
| | 11,58 Gew.-% | Atrazin, |
| | 11,57 Gew.-% | Terbutylazin, |
| | 2,75 Gew.-% | Äthylenglykol, |
| | 0,25 Gew.-% | Silikonöl, |
| | 1,40 Gew.-% | Mono- und Di-(tristyrylphenol-octadecylglykoläther)-phosphorsäureester-triäthanolammoniumsalz-Gemisch, |
| | 3,70 Gew.-% | Nonylphenol-hexaglykoläther, |
| | 0,90 Gew.-% | Nonylphenol-nonaglykoläther, |
| | 0,14 Gew.-% | Polysaccharid, |
| | 0,14 Gew.-% | Formaldehyd und |
| | ad 100 Gew.-% | Wasser. |
| γ) | 30,84 Gew.-% | Metolachlor, |
| | 15,46 Gew.-% | Terbutylazin, |
| | 4,60 Gew.-% | Äthylenglykol, |
| | 0,25 Gew.-% | Silikonöl, |
| | 1,95 Gew.-% | Mono- und di-(nonylphenol-hexaglykoläther)-phosphorsäureester-Kaliumsalz-Gemisch, |
| | 2,80 Gew.-% | Nonylphenol-hexaglykoläther, |
| | 0,40 Gew.-% | Nonylphenol-nonaglykoläther, |
| | 0,14 Gew.-% | Polysaccharid, |
| | 0,14 Gew.-% | Formaldehyd und |
| | ad 100 Gew.-% | Wasser. |

Die Viskosität nach dem Beispiel 1 hergestellten Formulierungen α, β und γ beträgt 400—800 mPas, die Dichte 1,08 ±0,015 g/ml und der pH-Wert 6,5—7,5.

## Patentansprüche

1. Fließfähige, herbizide Zusammensetzung bestehend aus mindestens einer festen dispersen Phase und einer kontinuierlichen wäßrigen Phase, die als wirksame Komponente eine Kombination von mindestens einem Chlortriazin und mindestens einem Chloracetanilid enthält, dadurch gekennzeichnet, daß sie

10 bis 50 Gew.-% eines Chlortriazins der Formel I,

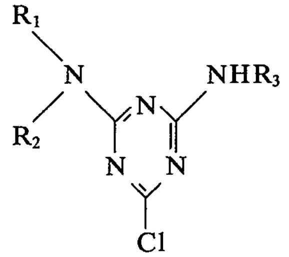

(I)

worin $R_1$ für $C_1$—$C_4$-Alkyl, $R_2$ für Wasserstoff oder $C_1$—$C_4$-Alkyl und $R_3$ für $C_3$—$C_4$-Cycloalkyl oder gegebenenfalls durch Methoxy oder Cyan substituiertes $C_1$—$C_4$-Alkyl stehen, oder eines Gemisches solcher Wirkstoffe;

10 bis 50 Gew.-% eines Chloracetanilids der Formel II

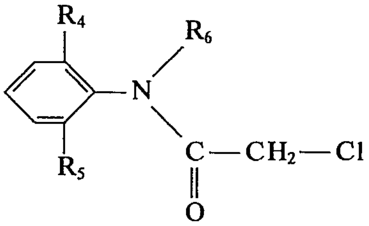

(II)

worin $R_4$ und $R_5$ unabhängig voneinander Methyl oder Äthyl und $R_6$ $C_3$—$C_4$-Alkinyl oder gegebenenfalls durch $C_1$—$C_4$-Alkoxy, Äthoxycarbonyl oder Pyrazolyl substituiertes $C_1$—$C_3$-Alkyl bedeuten, oder eines Gemisches solcher Wirkstoffe;

1 bis 10 Gew.-% eines anionischen Tensids der Klasse Mono- oder Di-(phenol-polyglykoläther)-phosphorsäureester oder deren Salze der Formel III,

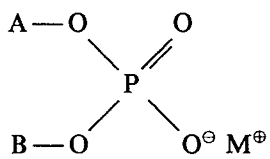

(III)

worin A einen Rest der Formel

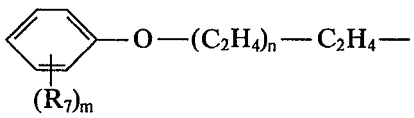

bedeutet,

B die gleiche Bedeutung wie A hat oder für Wasserstoff steht und $M^{\oplus}$ ein Proton oder ein Natrium-, Kalium- oder Triäthanolammoniumkation bedeutet, wobei n für eine ganze Zahl von 4 bis 40, m für eine ganze Zahl von 1 bis 4 und $R_7$ für Wasserstoff, Styryl oder $C_3$—$C_{10}$-Alkyl stehen;

0,5 bis 10 Gew.-% eines nichtionischen Tensids der Klasse Polyglykoläther der Formel IV,

$$R_8\text{—O—}(C_2H_4O)_p\text{—}C_2H_4\text{—OH} \qquad \text{(IV)}$$

worin p eine ganze Zahl von 2 bis 45 und $R_8$ $C_{12}$—$C_{18}$-Alkyl, $C_{12}$—$C_{22}$-Alkanoyl, $C_{12}$—$C_{22}$-Alkenoyl, $C_{12}$—$C_{22}$-Alkadienoyl, $C_{12}$—$C_{22}$-Alkatrienoyl oder durch $C_5$—$C_8$-Cycloalkyl oder ein bis drei $C_3$—$C_{10}$-Alkylreste substituiertes Phenyl bedeuten;

0 bis 9,5 Gew.-% eines weiteren nichtionischen Tensids der Formel IV, wobei dieses jeweils größere Anzahlen von Glykoleinheiten enthält und wobei die Gesamtmenge an nichtionischem Tensid zwischen 0,5 und 10 Gew.-% beträgt,

0 bis 5 Gew.-% eines wasserlöslichen oder in Wasser quellfähigen Verdickungsmittels und

0 bis 25 Gew.-% eines Antifrostmittels enthält.

2. Zusammensetzung gemäß Anspruch 1, dadurch gekennzeichnet, daß sie

0,6 bis 10 Gew.-% eines Gemisches zweier nichtionischer Tenside der Klasse Polyglykoläther der Formel IV,

$$R_8\text{—O—}(C_2H_4O)_p\text{—}C_2H_4\text{—OH} \qquad \text{(IV)}$$

die sich in der Anzahl der Glykoleinheiten p um mindestens die Zahl eins unterscheiden, wobei p eine ganze Zahl von 2 bis 45 und $R_8$ $C_{12}$—$C_{18}$-Alkyl, $C_{12}$—$C_{22}$-Alkanoyl, $C_{12}$—$C_{22}$-Alkenoyl, $C_{12}$—$C_{22}$-Alkadienoyl, $C_{12}$—$C_{22}$-Alkatrienoyl oder durch $C_5$—$C_8$-Cycloalkyl oder ein bis drei $C_3$—$C_{10}$-Alkylreste substituiertes Phenyl bedeuten und wobei der Mischungspartner mit der kleineren Anzahl von Glykoleinheiten im Gesamtgemisch in 0,5—9,9 Gew.-% und der Mischungspartner mit der größeren Anzahl von Glykoleinheiten im Gesamtgemisch in 0,1—5,0 Gew.-% vorhanden ist; enthält.

3. Zusammensetzung gemäß Anspruch 2, dadurch gekennzeichnet, daß sie

| | |
|---|---|
| 30 bis 50 Gew.-% | Wasser, |
| 15 bis 25 Gew.-% | eines Chlortriazins der Formel I oder eines Gemisches zweier solcher Wirkstoffe, |
| 10 bis 30 Gew.-% | eines Chloracetanilids der Formel II, |
| 1 bis 4 Gew.-% | eines anionischen Tensids der Formel III, |
| 2 bis 6 Gew.-% | eines nichtionischen Tensids der Formel IV mit (q-r) Glykoleinheiten und |
| 0 bis 2 Gew.-% | eines nichtionischen Tensids der Formel IV mit q Glykoleinheiten, wobei q eine Zahl von 3 bis 45 und r eine Zahl von 1 bis (q-2) bedeuten, |

enthalten.

4. Zusammensetzung gemäß Anspruch 3, dadurch gekennzeichnet, daß die Chlortriazinkomponente durch 2-Chlor-4-äthylamino-6-isopropylamino-1,3,5-triazin oder 2-Chlor-4-äthylamino-6-tert.butylamino-1,3,5-triazin bzw. ein Gemisch davon, das Chloracetanilid durch $\alpha$-Chlor-2'-äthyl-6'-methyl-N-(1-methyl-2-methoxyäthyl)-acetanilid, das anionische Tensid durch Mono- und Di-(tristyrylphenol-polyglykoläther)-phosphorsäureester- oder deren Triäthanolammoniumsalz-Gemische oder durch Mono- und Di-(nonylphenol-polyglykoläther)-phosphorsäureester- oder deren Kalium- oder Natriumsalz-Gemische und die nichtionischen Tenside durch Octyl- oder Nonylphenolpolyglykoläther mit 2 bis 13 Glykoleinheiten verkörpert sind.

5. Zusammensetzung gemäß Anspruch 4, dadurch gekennzeichnet, daß der Unterschied der Anzahl der Glykoleinheiten in den beiden nichtionischen Tensiden 2 bis 5 beträgt.

6. Zusammensetzung gemäß Anspruch 5, dadurch gekennzeichnet, daß sie

| | |
|---|---|
| 23,15 Gew.-% | $\alpha$-Chlor-2'-äthyl-6'-methyl-N-(1-methyl-2-methoxyäthyl)-acetanilid, |
| 23,15 Gew.-% | 2-Chlor-4-äthylamino-6-isopropylamino-1,3,5-triazin, |
| 2,30 Gew.-% | Äthylenglykol, |
| 0,20 Gew.-% | Silikonöl, |
| 1,70 Gew.-% | Mono- und Di-(tristyrylphenol-octadecaglykoläther)-phosphorsäureester-triäthanolammoniumsalz-Gemisch, |
| 3,70 Gew.-% | Nonylphenol-hexaglykoläther, |
| 1,10 Gew.-% | Nonylphenol-nonaglykoläther, |
| 0,15 Gew.-% | Polysaccharid, |
| 0,15 Gew.-% | Formaldehyd und |
| ad 100 Gew.-% | Wasser |

enthält.

7. Zusammensetzung gemäß Anspruch 5, dadurch gekennzeichnet, daß sie

| | |
|---|---|
| 23,15 Gew.-% | $\alpha$-Chlor-2'-äthyl-6'-methyl-N-(1-methyl-2-methoxyäthyl)-acetanilid, |
| 11,58 Gew.-% | 2-Chlor-4-äthylamino-6-isopropylamino-1,3,5-triazin, |
| 11,57 Gew.-% | 2-Chlor-4-äthylamino-6-tert.butylamino-1,3,5-triazin, |
| 2,75 Gew.-% | Äthylenglykol, |
| 0,25 Gew.-% | Silikonöl, |
| 1,40 Gew.-% | Mono- und Di-(tristyrylphenol-octadecylglykoläther)-phosphorsäureester-triäthanolammoniumsalz-Gemisch, |
| 3,70 Gew.-% | Nonylphenol-hexaglykoläther, |
| 0,90 Gew.-% | Nonylphenol-nonaglykoläther, |
| 0,14 Gew.-% | Polysaccharid, |
| 0,14 Gew.-% | Formaldehyd und |
| ad 100 Gew.-% | Wasser |

enthält.

8. Zusammensetzung gemäß Anspruch 5, dadurch gekennzeichnet, daß sie

| | |
|---|---|
| 30,84 Gew.-% | $\alpha$-Chlor-2'-äthyl-6'-methyl-N-(1-methyl-2-methoxyäthyl)-acetanilid, |
| 15,46 Gew.-% | 2-Chlor-4-äthylamino-6-tert.butylamino-1,3,5-triazin, |
| 4,60 Gew.-% | Äthylenglykol, |
| 0,25 Gew.-% | Silikonöl, |
| 1,95 Gew.-% | Mono- und Di-(nonylphenol-hexaglykoläther)-phosphorsäureester-Kaliumsalz-Gemisch, |
| 2,80 Gew.-% | Nonylphenol-hexaglykoläther, |
| 0,40 Gew.-% | Nonylphenol-nonaglykoläther, |
| 0,14 Gew.-% | Polysaccharid, |
| 0,14 Gew.-% | Formaldehyd und |
| ad 100 Gew.-% | Wasser |

enthält.

## Claims

1. A flowable herbicidal composition comprising at least one solid disperse phase and a continuous aqueous phase and containing, as active component, a combination of at least one chlorotriazine and at least one chloroanilide, which composition contains

10 to 50% by weight of a chlorotriazine of the formula I,

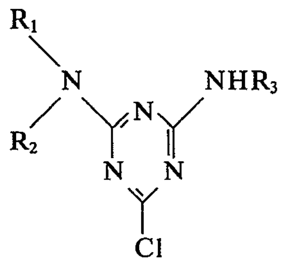

(I)

wherein $R_1$ is $C_1$—$C_4$alkyl, $R_2$ is hydrogen or $C_1$—$C_4$alkyl and $R_3$ is $C_3$—$C_4$cycloalkyl, $C_1$—$C_4$alkyl or $C_1$—$C_4$alkyl substituted by methoxy or cyano, or a mixture thereof;

10 to 50% by weight of a chloroacetanilide of the formula II

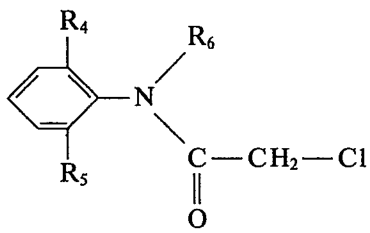

(II)

wherein $R_4$ and $R_5$, independently of each other, are methyl or ethyl and $R_6$ is $C_3$—$C_4$alkynyl, $C_1$—$C_3$alkyl or $C_1$—$C_3$alkyl substituted by $C_1$—$C_4$alkoxy, ethoxycarbonyl or pyrazolyl, or a mixture thereof;

1 to 10% by weight of an anionic surfactant of the class of the mono- or diphosphoric acid esters of phenol polyglycol ethers, or salts thereof, of the formula III

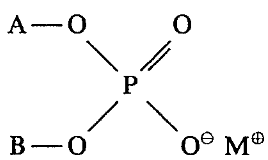

(III)

wherein A is a radical of the formula

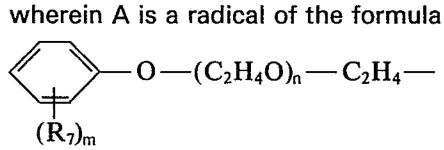

B has the same meaning as A or is hydrogen and $M^{\oplus}$ is a proton or a sodium cation, a potassium cation or a triethanolammonium cation, n is an integer from 4 to 40, m is an integer from 1 to 4, and $R_7$ is hydrogen, styryl or $C_3$—$C_{10}$alkyl;

0.5 to 10% by weight of a non-ionic surfactant of the class of the polyglycol ethers of the formula IV

$$R_8\text{—}O\text{—}(C_2H_4O)_p\text{—}C_2H_4\text{—}OH \qquad (IV)$$

wherein p is an integer from 2 to 45, and $R_8$ is $C_{12}$—$C_{18}$alkyl, $C_{12}$—$C_{22}$alkanoyl, $C_{12}$—$C_{22}$alkenoyl, $C_{12}$—$C_{22}$alkadienoyl, $C_{12}$—$C_{22}$alkatrienoyl or phenyl which is substituted by $C_5$—$C_8$cycloalkyl or by one to three $C_3$—$C_{10}$alkyl radicals;

0 to 9.5% by weight of a further non-ionic surfactant of the formula IV containing a larger number of glycol units, with the proviso that the total amount of non-ionic surfactant in the composition is 0.5 to 10% by weight;

0 to 5% by weight of a thickener which is soluble or able to swell in water, and

0 to 25% by weight of a frost protective.

2. A composition according to claim 1, which contains

0.6 to 10% by weight of a mixture of two non-ionic surfactants of the class of the polyglycol ethers of the formula IV

$$R_8-O-(C_2H_4O)_p-C_2H_4-OH \quad (IV)$$

which differ in the number of glycol units p by at least one, and p is an integer from 2 to 45, and $R_8$ is $C_{12}-C_{18}$alkyl, $C_{12}-C_{22}$alkanoyl, $C_{12}-C_{22}$alkenoyl, $C_{12}-C_{22}$alkadienoyl, $C_{12}-C_{22}$alkatrienoyl or phenyl which is substituted by $C_5-C_8$cycloalkyl or by one to three $C_3-C_{10}$alkyl radicals, with the proviso that the mixture component containing the smaller number of glycol units is present in the total composition in an amount of 0.5 to 9.9% by weight, and the mixture component containing the larger number of glycol units is present in the total composition in an amount of 0.1 to 5.0% by weight.

3. A composition according to claim 2, which contains

| | |
|---|---|
| 30 to 50% | by weight of water, |
| 15 to 25% | by weight of a chlorotriazine of the formula I or of a mixture of two such compounds, |
| 10 to 30% | by weight of a chloroacetanilide of the formula II, |
| 1 to 4% | by weight of an anionic surfactant of the formula III, |
| 2 to 6% | by weight of a non-ionic surfactant of the formula IV with (q-r) glycol units, and |
| 0 to 2% | by weight of a non-ionic surfactant of the formula IV with q glycol units, where q is an integer from 3 to 45 and r is an integer from 1 to (q-2). |

4. A composition according to claim 3, wherein the chlorotriazine component is 2-chloro-4-ethylamino-6-isopropylamino-1,3,5-triazine or 2-chloro-4-ethylamino-6-tert-butylamino-1,3,5-triazine or a mixture thereof, the chloroacetanilide is $\alpha$-chloro-2'-ethyl-6'-methyl-N-(1-methyl-2-methoxyethyl)acetaniline, the anionic surfactant is a mixture of a mono- and diphosphate of a tristyryl phenol polyglycol ether or of their triethanolammonium salts, or a mixture of a mono- and diphosphate of a nonyl polyglycol ether or of their potassium or sodium salts, and the non-ionic surfactants are octyl phenol or nonyl phenol polyglycol ethers having 2 to 13 glycol units.

5. A composition according to claim 4, wherein the difference of the number of glycol units in the two non-ionic surfactants is 2 to 5.

6. A composition according to claim 5, which contains

| | |
|---|---|
| 23.15% | by weight of $\alpha$-chloro-2'-ethyl-6'-methyl-N-(1-methyl-2-methoxyethyl)acetaniline, |
| 23.15% | by weight of 2-chloro-4-ethylamino-6-isopropylamino-1,3,5-triazine, |
| 2.3% | by weight of ethylene glycol, |
| 0.2% | by weight of silicone oil, |
| 1.7% | by weight of a mixture of the triethanolammonium salts of a mono- and diphosphate of a tristyryl phenol octadecaglycol ether, |
| 3.7% | by weight of nonyl phenol hexaglycol ether, |
| 1.1% | by weight of nonyl phenol nonaglycol ether, |
| 0.15% | by weight of polysaccharide, |
| 0.15% | by weight of formaldehyde and |

water to make up 100%.

7. A composition according to claim 5, which contains

| | |
|---|---|
| 23.15% | by weight of $\alpha$-chloro-2'-ethyl-6'-methyl-N-(1-methyl-2-methoxyethyl)acetaniline, |
| 11.58% | by weight of 2-chloro-4-ethylamino-6-isopropylamino-1,3,5-triazine, |
| 11.57% | by weight of 2-chloro-4-ethylamino-6-tert-butylamino-1,3,5-triazine, |
| 2.75% | by weight of ethylene glycol, |
| 0.25% | by weight of silicone oil, |
| 1.40% | by weight of mixture of the triethanolammonium salts of a mono- and diphosphate of a tristyryl phenol octadecaglycol ether, |
| 3.70% | by weight of nonyl phenol hexaglycol ether, |
| 0.90% | by weight of nonyl phenol nonaglycol ether, |
| 0.14% | by weight of polysaccharide, |
| 0.14% | by weight of formaldehyde and |

water to make up 100%.

8. A composition according to claim 5, which contains

| | |
|---|---|
| 30.84% | by weight of α-chloro-2′-ethyl-6-methyl-N-(1-methyl-2-methoxyethyl)acetaniline, |
| 15.46% | by weight of 2-chloro-4-ethylamino-6-tert-butylamino-1,3,5-triazine, |
| 4.60% | by weight of ethylene glycol, |
| 0.25% | by weight of silicone oil, |
| 1.95% | by weight of a mixture of the potassium salts of a mono- and diphosphate of a nonyl phenol hexaglycol ether, |
| 2.80% | of nonyl phenol hexaglycol ether, |
| 0.40% | by weight of nonyl phenol nonaglycol ether, |
| 0.14% | by weight of polysaccharide, |
| 0.14% | by weight of formaldehyde, and |

water to make up 100%.

**Revendications**

1. Composition herbicide pouvant couler constituée d'au moins une phase solide dispersée et d'une phase aqueuse continue qui contient comme composants actifs une combinaison d'au moins une chlorotriazine et au moins un chloroacétanilide caractérisée en ce qu'elle contient

10 à 50% en poids d'une chlorotriazine de formule I

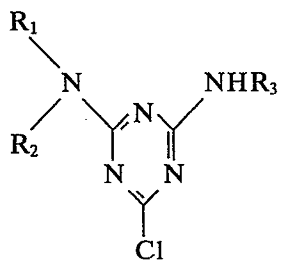

(I)

dans laquelle $R_1$ est cycloalkyle $C_1$—$C_4$, $R_2$ est l'hydrogène ou un alkyle $C_1$—$C_4$ et $R_3$ est un cycloalkyle $C_3$—$C_4$ ou le cas échéant un alkyle $C_1$—$C_4$ substitué par un méthoxy ou un cyano, ou un mélange de tels produits actifs;

10 à 50% en poids d'un chloroacétanilide de formule II

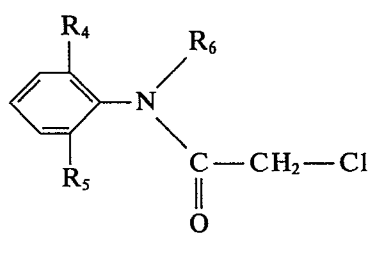

(II)

dans laquelle $R_4$ et $R_5$ sont indépendamment l'un de l'autre méthyle ou éthyle et $R_6$ est alkinyl $C_3$—$C_4$ ou le cas échéant alkyle $C_1$—$C_3$ substitué par un alcoxy $C_1$—$C_4$, un éthoxycarbonyle ou pyrazolyle, ou un mélange de tels produits actifs;

1 à 10% d'un tensioactif anionique de la classe des esters phosphoriques mono- ou di-(phénolpolyglycoléther) ou leurs sels de formule III

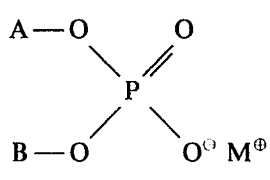

(III)

dans laquelle A est un reste de formule

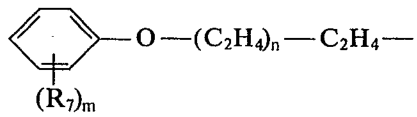

B a la même signification que A ou est de l'hydrogène, et $M^{\oplus}$ est un proton ou un cation sodium, potassium ou triéthanolammonium, dans laquelle n est un nombre entier de 4 à 50, m est un nombre entier de 1 à 4 et $R_7$ est l'hydrogène, styryle ou alkyle $C_3$—$C_{10}$;

0,5 à 10% en poids d'un tensioactif non-ionique de la classe polyglycoléther de formule IV,

$$R_8\text{—O—}(C_2H_4O)_p\text{—}C_2H_4\text{—OH} \qquad \text{(IV)}$$

dans laquelle p est un nombre entier de 2 à 45 et $R_8$ un alkyle $C_{12}$—$C_{18}$, un alcanoyle $C_{12}$—$C_{22}$, un alkénoyle $C_{12}$—$C_{22}$, un alcadiénoyle $C_{12}$—$C_{22}$, un alcatriènoyle $C_{12}$—$C_{22}$ ou un phényle substitué par un cycloalkyle $C_5$—$C_8$ ou par un à trois restes alkyles $C_3$—$C_{10}$;

0 à 9,5% en poids d'un autre tensioactif de formule IV, dans laquelle celui-ci contient des nombres élevés d'unités glycol et dans laquelle la quantité totale en tensio-actif non-ionique est comprise entre 0,5 et 10% en poids,

0 à 5% en poids d'un agent épaississant soluble dans l'eau ou gonflant dans l'eau et

0 à 25% en poids d'un agent antigel.

2. Composition selon la revendication 1, caractérisée en ce qu'elle contient

0,6 à 10% en poids d'un mélange de deux tensioactifs de formule IV,

$$R_8\text{—O—}(C_2H_4O)_p\text{—}C_2H_4\text{—OH} \qquad \text{(IV)}$$

qui se différencient au moins du nombre un dans le nombre p des unités glycol, dans lesquels p est un nombre entier de 2 à 45 et $R_8$ un alkyle $C_{12}$—$C_{18}$, un alcanoyle $C_{12}$—$C_{22}$, un alkénoyle $C_{12}$—$C_{22}$, un alcadiènoyle $C_{12}$—$C_{22}$, un alcatriènoyle $C_{12}$—$C_{22}$ ou un phényle substitué par un cycloalkyle $C_5$—$C_8$ ou par un à trois restes alkyles $C_3$—$C_{10}$ et dans lesquels le partenaire du mélange qui a le plus petit nombre d'unités glycol est présent à raison de 0,5—9,9% en poids et la partenaire du mélange avec le nombre d'unités glycol le plus élevé est présent dans le mélange total à raison de 0,1—5,0% en poids.

3. Composition selon la revendication 2, caractérisée en ce qu'elle contient:

30 à 50% en poids d'eau
15 à 25% en poids d'une chlorotriazine de formule I ou d'un mélange de tels produits actifs
10 à 30% en poids d'un chloroacétanilide de formule II,
1 à 4% en poids d'un tensioactif anionique de formule III
2 à 6% en poids d'un tensioactif non-ionique de formule IV avec (q-r) unités glycol et
0 à 2% en poids d'un tensioactif non-ionique de formule IV avec q unités glycol, dans laquelle q est un nombre de 3 à 45 et r un nombre de 1 à (q-2).

4. Composition selon la revendication 3, caractérisée en ce que les composés de chlorotriazine sont représentés par la 2-chloro-4-éthylamino-6-isopropylamino-1,3,5-triazine ou la 2-chloro-4-éthylamino-6-tert.butylamino-1,3,5-triazine ou leur mélange, le chloroacétanilide par l'$\alpha$-chloro-2'-éthyl-6'-méthyl-N-(1-méthyl-2-méthoxyéthyl)-acétaniline, le tensioactif anionique par les mélanges d'esters d'acide phosphorique de mono- et di-(tristyrylphénol-polyglycoléther) ou de leurs sels de triéthanolammonium ou par des mélanges d'esters d'acide phosphorique de mono- et di-(nonylphénol-polyglycoléther) ou de leurs sels de potassium ou de sodium et les tensioactifs non-ioniques par l'octyl- ou nonylphénolpolyglycoléther avec 2 à 13 unités glycol.

5. Composition selon la revendication 4, caractérisée en ce que, l'écart des nombres des unités glycol dans les deux tensioactifs non-ioniques est de 2 à 5.

6. Composition selon la revendication 5, caractérisée en ce qu'elle contient:

23,15% en poids $\alpha$-chloro-2'-éthyl-6'-méthyl-N-(1-méthyl-2-méthoxyéthyl)acétaniline,
23,15% en poids 2-chloro-4-éthylamino-6-isopropylamino-1,3,5-triazine
2,3% en poids éthylèneglycol,
0,20% en poids huile de silicone
1,70% en poids mélange de sel de triéthanolammonium d'ester d'acide phosphorique de mono- et di-(tristyrylphénol-octadécaglycoléther)
3,7% en poids nonylphénol-hexaglycoléther
1,1% en poids nonylphénol-nonaglycoléther

| | |
|---|---|
| 0,15% | en poids polysaccharide |
| 0,15% | en poids formaldéhyde et |

q.s.p.f. 100% en poids eau.

7. Composition selon la revendication 5 caractérisée en ce qu'elle contient:

| | |
|---|---|
| 23,15% | en poids $\alpha$-chloro-2'-éthyl-6'-méthyl-N-(1-méthyl-2-méthoxyéthyl)-acétaniline |
| 11,58% | en poids 2-chloro-4-éthylamino-6-isopropylamino-1,3,5-triazine |
| 11,57% | en poids 2-chloro-4-éthylamino-6-tert.butylamino-1,3,5-triazine |
| 2,75% | en poids éthylèneglycol |
| 0,25% | en poids huile de silicone |
| 1,40% | en poids mélange de sel de triéthanolammonium d'ester d'acide phosphorique de mono- et di-(tristyrylphénol-octadécylglycoléther) |
| 3,70% | en poids nonylphénol-hexaglycoléther, |
| 0,90% | en poids nonylphénol-nonaglycoléther, |
| 0,14% | en poids polysaccharide, |
| 0,14% | en poids formaldéhyde |

q.s.p.f. 100% en poids eau.

8. Composition selon la revendication 5 caractérisée en ce qu'elle contient

| | |
|---|---|
| 30,84% | en poids $\alpha$-chloro-2'-éthyl-6'-méthyl-N-(1-méthyl-2-méthoxyéthyl)-acétaniline, |
| 15,46% | en poids 2-chloro-4-éthylamino-6-tert.butylamino-1,3,5-triazine |
| 4,6% | en poids éthylèneglycol |
| 0,25% | en poids huile de silicone |
| 1,95% | en poids mélange de sel de potassium d'ester d'acide phosphorique de mono- et di-(nonylphénol-hexaglycoléther) |
| 2,80% | en poids nonylphénol-hexaglycoléther, |
| 0,40% | en poids nonylphénol-nonaglycoléther, |
| 0,14% | en poids polysaccharide |
| 0,14% | en poids formaldéhyde et |

q.s.p.f. 100% en poids eau.